# EUROPEAN PATENT SPECIFICATION

(11) **EP 0 557 584 B1**
(45) Date of publication and mention of the grant of the patent: **27.05.1998**
(21) Application number: 92118827.2
(22) Date of filing: 03.11.1992
(51) Int. Cl.: G11B 7/00, G11B 7/125

(54) **Method of and apparatus for recording information on a writable optical disc**
Verfahren und Vorrichtung zur Aufzeichnung von Informationen auf einer beschreibbaren optischen Platte
Procédé et appareil pour l'enregistrement d'informations sur un disque optique du type enregistable

(30) Priority: 27.02.1992 JP 76024/92
(43) Date of publication of application: 01.09.1993
(73) Proprietor: PIONEER ELECTRONIC CORPORATION, Meguro-ku Tokyo (JP)
(72) Inventor: Yanagawa, Naoharu, c/o Tokorozawa Koujou, Pioneer, Tokorozawa-shi, Saitama-ken (JP)
(74) Representative: Sajda, Wolf E., Dipl.-Phys.

(56) References cited:
- EP-A- 0 404 249
- EP-A- 0 405 610
- EP-A- 0 430 649
- EP-A- 0 466 073
- US-A- 4 937 809
- PATENT ABSTRACTS OF JAPAN vol. 9, no. 105 (P-354)(1828) 9 May 1985 & JP-A-59 227 043
- PATENT ABSTRACTS OF JAPAN vol. 10, no. 312 (P-509)(2368) 23 October 1986 & JP-A-61 122 932
- PATENT ABSTRACTS OF JAPAN vol. 7, no. 176 (P-214)(1321) 4 August 1983 & JP-A-58 080 138
- PATENT ABSTRACTS OF JAPAN vol. 8, no. 18 (P-250)(1455) 26 January 1984 & JP-A-58 177 534

## Description

### BACKGROUND OF THE INVENTION

The present invention relates to a method of and an apparatus for recording information on an optical disc.

There are optical discs such as a CD including a read only CD and a writable CD-R disc which is used as a ROM. Further, as a writable optical disc having a high recording density, a write once disc and an erasable disc are available. Information is recorded on the disc and reproduced therefrom with a laser beam. These discs are different from a CD concerning the material of the recording surface.

For example, a write once (CD-WO) disc has a tellurium or bismuth recording surface in which the lasers burn pits for recording. In another type of the CD-WO discs, the lasers are focused on a recording surface coated with a selenium antimony (Sb₂Se₃) thin film, or an tellurium oxide (TeOx) thin film, or a thin film of an organic pigment, in order to change the reflectivity of the light.

An erasable disc uses a recording surface, consisting of an amorphous alloy made of rare earth metals such as gallium, terbium, and others. In a magneto-optical recording method, the recording surface of the disc is initially magnetized to form a magnetic field in a direction perpendicular to the surface. The laser heats a predetermined area of the disc to elevate the temperature above the Curie temperature, which is about 150 °C, thereby reversing the direction of the magnetic field. In order to read the recorded information, laser light is irradiated on the recording surface so that a polarized wave front rotates slightly as a result of the Kerr effect.

Thus only the polarized wave deflected by the rotation is read by a photodetector, thereby enabling a user to read the information.

In a CD-WO disc and an erasable disc, pits are formed in the disc by the laser in accordance with a pit-position recording method or a pit-edge recording method.

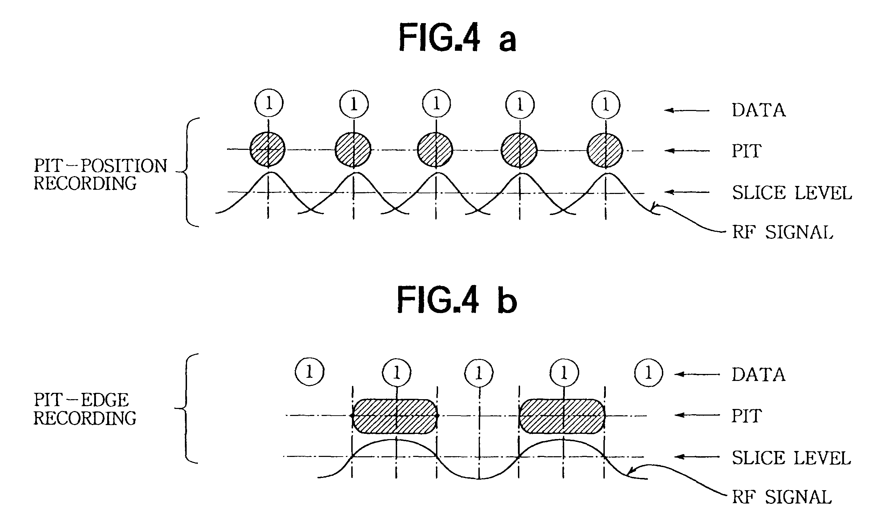

Figs. 4a and 4b show principles of the pit-position recording method and the pit-edge recording method, respectively. As shown in Fig. 4a, the pit-position recording method makes a circular pit corresponding to coded-data "1". To the contrary, as shown in Fig. 4b, the pit-edge recording method makes a pit having a leading edge and a trailing edge each of which corresponds to a coded-data "1". Thus, the pit-edge recording method can achieve a bit density twice as much as that of the pit-position method.

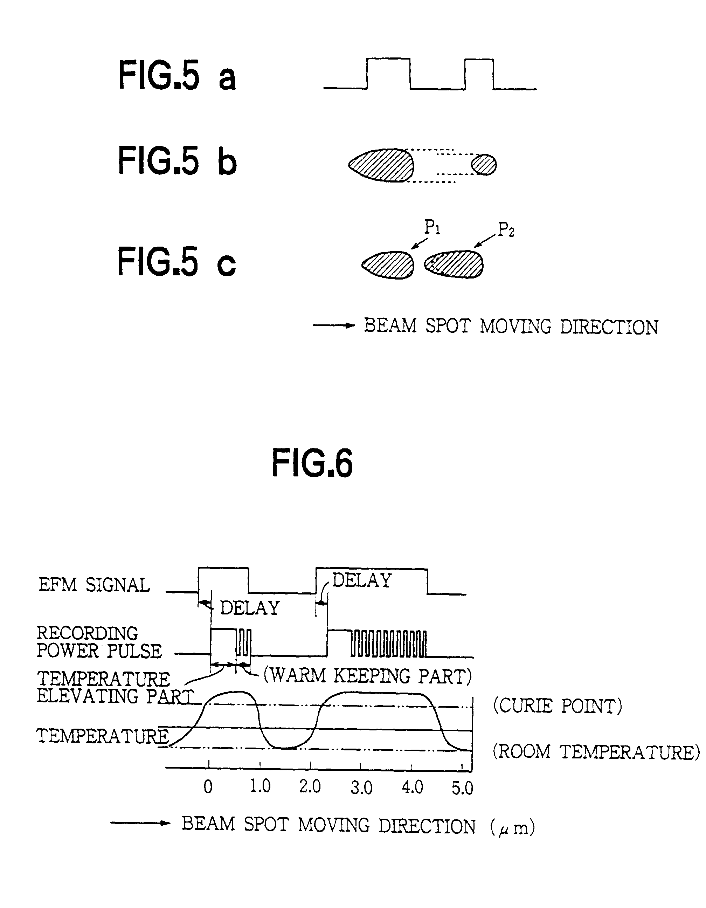

However, in the pit-edge recording method, if pits are formed in the optical disc based on data recording power pulses as shown in Fig. 5a, each of the pits obtains a tear-drop shape as shown in Fig. 5b because the heat supplied by the laser is accumulated in the disc.

Furthermore, if a pit P2 is formed after a pit P1 with a short distance therebetween as shown in Fig. 5c, the leading edge of the pit P2 shown by a dotted line is liable to shift toward the pit P1 shown by a solid line because of a thermal interaction between the pits. If pits of information are deformed, an RF signal may have jitters at the reproduction of the information, causing noises in the reproduced sound.

Fig. 6 shows a conventional method for suppressing such jitters which is called a multi-pulse recording method. In this method, a recording power pulse of a laser is slightly delayed with respect to an EFM signal (data pulses). The recording power pulse comprises a temperature elevating part and warm keeping part so as to equalize the temperature distribution on the disc. The warm keeping part comprises a plurality of fine pulses formed by slitting a trailing part of the power pulse. Since recording conditions of the discs vary with the type of the disc and room temperature at recording, it is necessary to change the recording power pulse in dependency on such conditions. It is very difficult to obtain optimum pits suitable for the conditions. In particular, since an optical disc of a CAV type has a differing linear velocity on the disc, it is necessary to vary the recording waveform in dependency on the linear velocity.

### SUMMARY OF THE INVENTION

The object of the present invention is to provide a method of and an apparatus for recording information whereby the information can properly be recorded on an optical disc.

According to a first aspect of the present invention, there is provided a method as defined in claim 1.

Also, according to a second aspect of the invention, there is provided an apparatus as defined in claim 4.

Other objects and features of this invention will become apparent from the following description of a preferred embodiment with reference to the accompanying drawings.

### BRIEF DESCRIPTION OF DRAWINGS

- Fig. 1: is a block diagram showing an optical pickup according to the present invention;
- Fig. 2: is a diagram schematically showing areas of a CD-WO disc;
- Fig. 3: is a flowchart showing an operation of the pickup;
- Figs. 4a and 4b: are diagrams showing principles of pit-position and pit-edge recording methods, respectively;
- Figs. 5a to 5c: are diagrams showing data pulses and deformed pits recorded by the data pulses; and
- Fig. 6: shows a diagram showing a conventional multi-pulse recording method.

### DETAILED DESCRIPTION OF THE PREFERRED EMBODIMENT

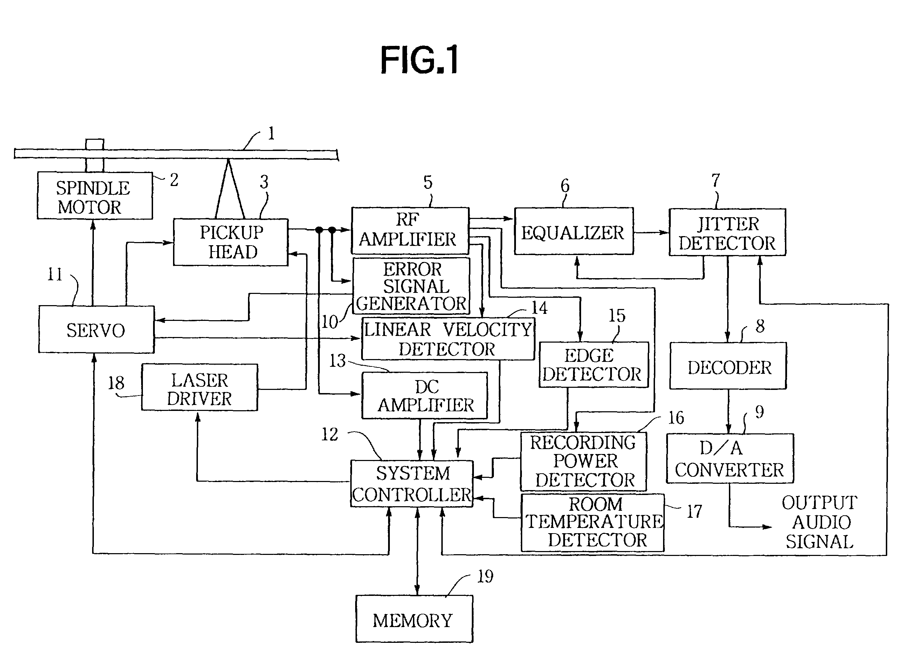

Referring to Fig. 1, a recording system of an optical pickup according to the present invention comprises a CD-WO disc 1 secured to a spindle of a spindle motor 2 to be rotated by the spindle motor 2, and an optical pickup head 3 producing a laser beam for recording information on the disc 1 and reproducing the recorded information on the disc. A servo 11 is connected to the pickup head 3 for tracking and focusing the beam from the pickup head 3 on the disc 1, and is connected to the spindle motor 2 for controlling the rotating speed of the spindle motor 2 based on a control signal supplied from a system controller 12. A laser driver 18 is connected to the pickup head 3 for properly adjusting the power of the laser from the pickup head 3 based on a control signal from the system controller 12.

The pickup head 3 reads out the information on the recording surface of the CD-WO disc 1 and produces a reproduced RF signal which is supplied to an RF amplifier 5. In the RF amplifier 5, the RF signal is amplified and the amplified signal is supplied to an equalizer 6 for equalizing the frequency characteristic of the signal. An output signal of the equalizer 6 is supplied to a jitter detector 7 where jitters in the signal is detected. An output signal of the jitter detector 7 is applied to a D/A converter 9 through a decoder 8. In the D/A converter 9, the signal is converted into an analog signal in order to produce an audio signal.

The signal from the pickup head 3 is further applied to an error signal generator 10. The error signal generator 10 generates a tracking error signal and a focus error signal which are applied to the servo 11. The servo 11 applies a signal to the pickup head 3 so as to control it and to compensate the tracking error and the focus error so that their values become zero.

In order to determine an optimum condition for recording information on a disc, the recording system is provided with a DC amplifier 13 supplied with the signal from the pickup head 3, a linear velocity detector 14, an edge detector 15 and a recording power detector 16 which are supplied with the output signal from the RF amplifier 5, and a room temperature detector 17.

The DC amplifier 13 detects the reflectivity of the disc 1 in accordance with the signal from the pickup head 3. The linear velocity detector 14 is further supplied with the rotating speed signal of the spindle motor 2 from the servo 11 and a position signal detected by a position sensor (not shown) representing the position of the pickup head 3 in the radial direction of the disc 1. The linear velocity detector 14 detects the linear velocity of the disc at the spot of the laser on the disc 1, based on the input signals.

The edge detector 15 detects a leading edge and a trailing edge of a pit on the disc 1 to obtain the length of a reproducing pit. The recording power detector 16 detects a recording power of test pits formed on the disc 1 at a power calibration area (PCA) of the CD-WO disc 1. The room temperature detector 17 comprises a thermocouple and detects a room temperature when recording information on the disc 1. These signals from the DC amplifier 13 and the detectors 14, 15, 16. and 17 are applied to a memory 19 through the system controller 12 and stored therein.

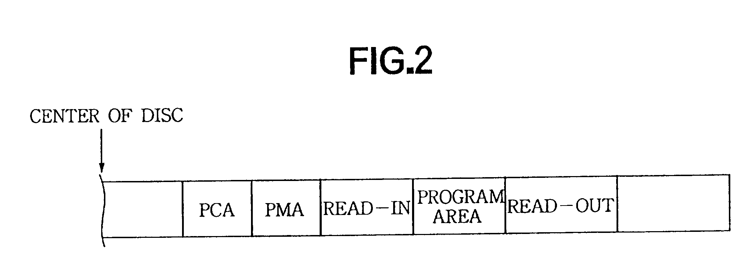

As shown in Fig. 2, the PCA is provided on the innermost portion of the disc 1 inside of a program memory area (PMA) for calculating a recording power based on the detected recorded power of the test pits.

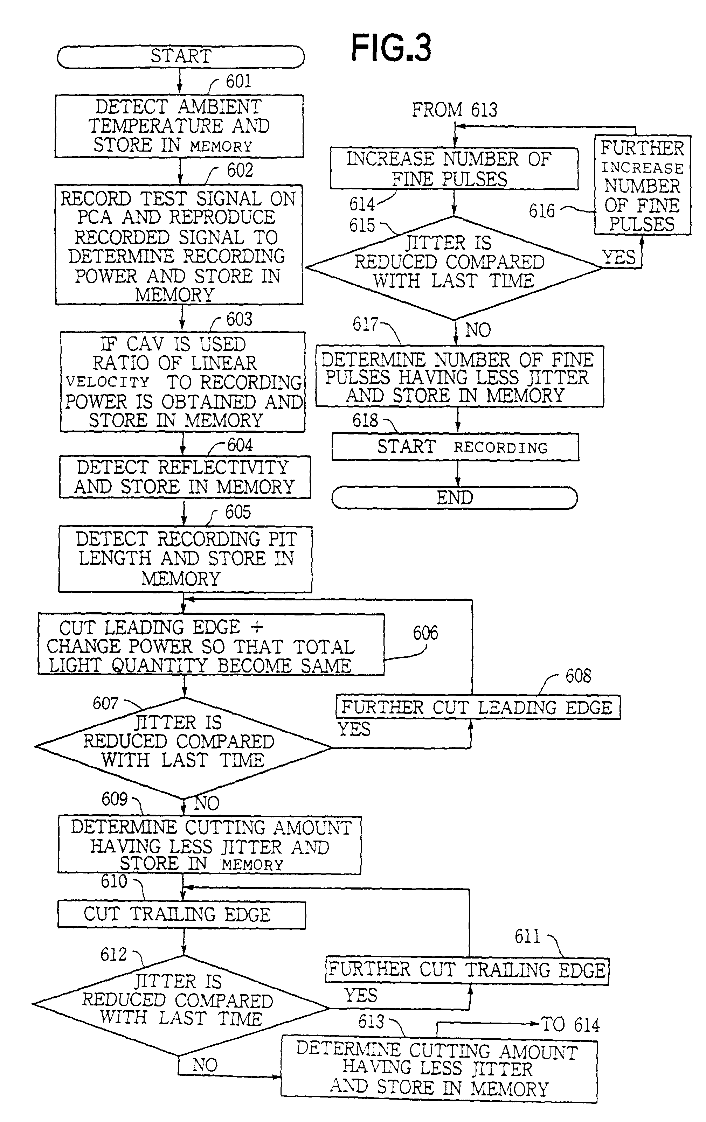

The operation of the system for obtaining the optimum condition of the disc 1 for recording information will be described with reference to the flowchart of Fig. 3. Operation is performed by a manufacturer of the player.

At a step 601, the room temperature is detected by the room or ambient temperature detector 17 and stored in the memory 19. At a step 602, the pickup head 3 is moved to the PCA, where a test pulse is recorded to form a test pit on the PCA. The recording power pulse of the test pulse is determined by the power detected by the recording power detector 16. An optimum recording power for recording information on the disc 1 is calculated based on the determined recording power pulse, and the calculated recording power is stored in the memory 19 in the form of a pulse. In the operation if a disc 1 of a CAV type is used, the ratio of the linear velocity detected by the linear velocity detector 14 to the recording power is obtained and stored in the memory 19 at a step 603. At a step 604, the reflectivity of the disc 1 is detected by the DC amplifier 13 and stored in the memory 19. At a step 605, the length of the recorded pit is detected by the edge detector 15 and stored in the memory 19.

At a step 606, the leading edge of the calculated power pulse is slightly cut away and the information of a new test pit by the cut power pulse is reproduced again. At a step 607, it is determined whether the jitter detected by the jitter detector 7 is reduced compared with the last time or not. If the jitter is reduced, the program goes to a step 608 where the leading edge is further cut. The program returns to the step 606. If the jitter is not reduced at the step 607, the program goes to a step 609 where the cutting amount of the leading edge of the power pulse having less jitter is determined and stored in the memory 19.

At a step 610, the trailing edge of the power pulse is cut and the information of a new test pit is reproduced again. At a step 612, it is determined whether the jitter detected by the jitter detector 7 is reduced compared with the last time or not. If the jitter is reduced, the program goes to a step 611 where the trailing edge is further cut. The program returns to the step 610. If the jitter is not reduced at the step 612, the program goes to a step 613 where the cutting amount of the trailing edge having less jitter is determined and stored in the memory 19.

At a step 614, the number of fine pulses in the warm keeping part of the power pulse is increased and the information of a new test pit is reproduced again.

At a step 615, it is determined whether the jitter detected by the jitter detector 7 is reduced compared with the last time or not. If the jitter is reduced, the program goes to a step 616 where the number of fine pulses is further increased. The program returns to the step 614. If the jitter is not reduced at the step 615, the program goes to a step 617 where the number of fine pulses having less jitter is determined and stored in the memory 19.

At a step 618, recording information on the program area of the disc 1 is started based on the optimum condition stored in the memory 19.

Such an operation is performed on various types of discs 1 to obtain respective optimum conditions which are stored in the memory 19. Thus, the optimum condition corresponding to the different types of discs can be retrieved from the memory 19 by a user.

Even if the various factors such as room temperature vary during recording the information, the optimum condition of the disc is obtained. Furthermore, if a CAV disc is used, it is possible to change the recording power based on the result detected by the linear velocity detector 14. Thus, a proper pit for the disc 1 is easily formed.

Since the system has a self-learning function, the optimum condition stored in the memory 19 is updated in dependency on variations of the condition with time.

Thus, noises of the signal are reduced, so that information is properly reproduced.

## Claims

1. A method of recording information on a writable optical disc, comprising:
a) forming test pits with an optical pulse in an area (PCA) of the disc;
b) detecting jitters in a signal obtained by reproducing the test pits;
c) determining and storing an optimum recording pulse found by changing the pulse width to reduce jitters;
d) recording information on the optical disc with pulses defined by said stored optimum pulse;
characterized by
a step prior to step (a) of detecting operational conditions for recording information on said disc,
wherein the test pits in step (a) are formed by a pulse, which is dependent on said detected conditions.

2. The method according to Claim 1, wherein the operational conditions include the ambient temperature (17), the recording power (16), the reflectivity (13) of the optical disc (1), and the linear velocity (14) of the disc at the radial position of a pickup (3).

3. The method according to Claim 1 or 2, wherein changing the pulse width comprises cutting the leading edge and the trailing edge of the pulse, and chopping the trailing part of the pulse to form a plurality of finer sub-pulses.

4. An apparatus for recording information on a writable optical disc (1), comprising:
means (18) for forming test pits with an optical pulse in an area (PCA) of the optical disc;
means (6, 7) for detecting jitters in a signal obtained by a pickup (3) when reproducing the test pits;
means (12) for changing the pulse width to reduce jitters and for determining an optimum recording pulse and means (19) for storing the optimum pulse;
means (12, 18) for recording information on the disc with pulses defined by said stored optimum pulse;
characterized in that
detecting means (13, 14, 16, 17) are provided for detecting operational conditions for recording information on the optical disc,
said forming means (18) being adapted to form the test pits by a pulse, which is dependent on the conditions detected by said detecting means (13, 14, 16, 17).

5. The apparatus according to Claim 4, wherein said detecting means comprise a DC amplifier (13) for the reflectivity of the disc (1), a linear velocity detector (14) for the linear velocity of the disc (1), a recording power detector (16) and an ambient temperature detector (17).

6. The apparatus according to Claim 4 or 5, wherein an edge detector (15) is provided for detecting the leading edge and the trailing edge of the respective pits formed in the optical disc (1).

## Patentansprüche

1. Verfahren zum Aufzeichnen von Information auf einer beschreibbaren optischen Platte, wobei das Verfahren die folgenden Schritte aufweist:
a) Bilden von Prüf-Pits mit einem optischen Impuls in einem Bereich (PCA) der Platte;
b) Detektieren von Jittern in einem Signal, das durch Wiedergabe der Prüf-Pits erhalten wird;
c) Bestimmen und Speichern eines optimalen Aufzeichnungsimpulses, der durch Ändern der Impulsbreite zur Verminderung von Jittern gefunden wird;
d) Aufzeichnen von Information auf der optischen Platte mit Impulsen, die durch den gespeicherten optimalen Impuls definiert sind;
gekennzeichnet durch
einen vor Schritt (a) ausgeführten Schritt zum Detektieren von Betriebsbedingungen, um Information auf der Platte aufzuzeichnen,
wobei die Prüf-Pits in Schritt (a) von einem Impuls gebildet werden, der von den detektierten Bedingungen abhängig ist.

2. Verfahren nach Anspruch 1,
wobei die Betriebsbedingungen folgendes umfassen: die Umgebungstemperatur (17), die Aufzeichnungsleistung (16), das Reflexionsvermögen (13) der optischen Platte (1) und die lineare Geschwindigkeit (14) der Platte in der radialen Position eines Abnehmers (3).

3. Verfahren nach Anspruch 1 oder 2,
wobei das Ändern der Impulsbreite folgendes aufweist: das Abschneiden der Vorderflanke und der Rückflanke des Impulses und das Zerhacken des hinteren Teils des Impulses, um eine Vielzahl von feineren Unterimpulsen zu bilden.

4. Vorrichtung zum Aufzeichnen von Information auf einer beschreibbaren optischen Platte (1), wobei die Vorrichtung folgendes aufweist:
eine Einrichtung (18) zum Bilden von Prüf-Pits mit einem optischen Impuls in einem Bereich (PCA) der optischen Platte;
Einrichtungen (6, 7) zum Detektieren von Jittern in einem Signal, das von einem Abnehmer (3) erhalten wird, wenn die Prüf-Pits wiedergegeben werden;
eine Einrichtung (12) zum Ändern der Impulsbreite, um Jitter zu vermindern und um einen optimalen Aufzeichnungsimpuls zu bestimmen, und eine Einrichtung (19) zum Speichern des optimalen Impulses; und
Einrichtungen (12, 18) zum Aufzeichnen von Information auf der Platte mit Impulsen, die durch den gespeicherten optimalen Impuls definiert sind;
dadurch gekennzeichnet,
daß Detektiereinrichtungen (13, 14, 16, 17) vorgesehen sind, um Betriebsbedingungen zum Aufzeichnen von Information auf der optischen Platte zu detektieren,
wobei die Formungseinrichtung (18) dazu ausgebildet ist, die Prüf-Pits durch einen Impuls zu bilden, der von den Bedingungen abhängt, die von den Detektiereinrichtungen (13, 14, 16, 17) detektiert werden.

5. Vorrichtung nach Anspruch 4,
wobei die Detektiereinrichtungen folgendes aufweisen: einen Gleichstromverstärker (13) für das Reflexionsvermögen der Platte (1), einen Lineargeschwindigkeits-Detektor (14) für die lineare Geschwindigkeit der Platte (1), einen Aufzeichungsleistungs-Detektor (16) und einen Umgebungstemperatur-Detektor (17).

6. Vorrichtung nach Anspruch 4 oder 5,
wobei ein Flankendetektor (15) vorgesehen ist, um die Vorderflanke und die Rückflanke der jeweiligen Pits, die in der optischen Platte (1) gebildet sind, zu detektieren.

## Revendications

1. Procédé d'enregistrement d'informations sur un disque optique d'écriture, comprenant :
(a) la formation de microcuvettes de test avec une impulsion optique dans une zone (PCA) du disque ;
(b) la détection d'instabilités dans un signal obtenu par reproduction des microcuvettes de test ;
(c) la détermination et le stockage d'une impulsion d'enregistrement optimale trouvée par modification de la largeur d'impulsion pour réduire les instabilités ;
(d) l'enregistrement d'informations sur le disque optique avec des impulsions définies par ladite impulsion optimale stockée ;
caractérisé par :
une étape, avant l'étape (a), de détection des conditions opératoires pour l'enregistrement d'informations sur ledit disque ;
de sorte que les microcuvettes de test sont formées, à l'étape (a), par une impulsion qui dépend des dites conditions détectées.

2. Procédé suivant la revendication 1, dans lequel les conditions opératoires comprennent la température ambiante (17), la puissance d'enregistrement (16), la réflectivité (13) du disque optique (1) et la vitesse linéaire (14) du disque à la position radiale d'une tête de lecture (3).

3. Procédé suivant la revendication 1 ou 2, dans lequel la modification de la largeur d'impulsion comprend la coupe du bord avant et du bord arrière de l'impulsion, et le hachage de la partie arrière de l'impulsion de manière à former une pluralité de sous-impulsions plus fines.

4. Appareil pour l'enregistrement d'informations sur un disque optique d'écriture (1), comprenant :
des moyens (18) de formation de microcuvettes de test avec une impulsion optique dans une zone (PCA) du disque optique ;
des moyens (6,7) de détection d'instabilités dans un signal obtenu par une tête de lecture (3) lors de la reproduction des microcuvettes de test ;
des moyens (12) de modification de la largeur d'impulsion afin de réduire les instabilités, et de détermination d'une impulsion d'enregistrement optimale, ainsi que des moyens (19) de stockage de l'impulsion optimale ;
des moyens (12,18) d'enregistrement d'informations sur le disque avec des impulsions définies par ladite impulsion optimale stockée ;
caractérisé en ce que :
des moyens de détection (13,14,16,17) sont prévus pour détecter les conditions opératoires pour l'enregistrement d'informations sur le disque optique,
lesdits moyens de formation (18) étant prévus pour former les microcuvettes de test par une impulsion qui dépend des conditions détectées par lesdits moyens de détection (13,14,16,17).

5. Appareil suivant la revendication 4, dans lequel lesdits moyens de détection comprennent un amplificateur de courant continu (13) pour la réflectivité du disque (1), un détecteur de vitesse linéaire (14) pour la vitesse linéaire du disque (1), un détecteur de puissance d'enregistrement (16) et un détecteur de température ambiante (17).

6. Appareil suivant la revendication 4 ou 5, dans lequel un détecteur de bord (15) est prévu pour détecter le bord avant et le bord arrière des microcuvettes respectives formées dans le disque optique (1).
